# EUROPÄISCHE PATENTSCHRIFT

(11) **EP 0 433 637 B1**
(45) Veröffentlichungstag und Bekanntmachung des Hinweises auf die Patenterteilung: **01.06.1994**
(21) Anmeldenummer: 90121356.1
(22) Anmeldetag: 08.11.1990
(51) Int. Cl.: B01D 46/24

(54) **Vorrichtung zum Entstauben eines Gasstromes**
Device for removing dust from a gas
Dispositif pour séparer des poussières d'un gaz

(30) Priorität: 21.12.1989 DE 8914966 U
(43) Veröffentlichungstag der Anmeldung: 26.06.1991
(73) Patentinhaber: DEUTSCHE BABCOCK ANLAGEN GMBH, 46049 Oberhausen (DE)
(72) Erfinder: Kilicaslan, Muharrem, W-4223 Voerde (DE); Meier, Hans-Joachim, W-4234 Menzelen (DE); Raue, Wolfgang, W-4100 Duisburg 29 (DE); Rehwinkel, Heiko, Dr., W-4250 Bottrop (DE); Ruther, Gerd, W-4300 Essen (DE); Rütten, Jürgen, Dr., W-4152 kempen 1 (DE)
(74) Vertreter: Planker, Karl-Josef, Dipl.-Phys.

(56) Entgegenhaltungen:
- EP-A- 0 129 053
- DE-A- 1 607 686
- FR-A- 1 564 264
- GB-A- 2 155 354

## Beschreibung

Die Erfindung betrifft eine Vorrichtung zum Entstauben eines Gasstromes, insbesondere eines unter erhöhtem Druck stehenden Heißgasstromes, gemäß dem Oberbegriff der Patentansprüche 1 und 2.

Die Entwicklung der Heißgasentstaubungstechnik bei hohen Drücken wurde insbesondere durch die Einführung der druckaufgeladenen Wirbelschichtfeuerung vorangetrieben. Sie gewinnt auch bei chemischen und metallurgischen Prozessen immer mehr an Interesse.

Für die Filtration bei Temperaturen von 500 - 1200 °C und darüber sind Kerzen aus porösem Keramikmaterial entwickelt worden. Die Kerzen können nicht in beliebigen Längen hergestellt werden; die längsten heute verfügbaren Kerzen sind etwa 1,50 m lang. Um die erforderliche Filterfläche, das heißt die erforderliche Anzahl von Filterkerzen, in einem Gehäuse begrenzter Grundfläche unterzubringen, ist es unumgänglich, die Filterkerzen in mehreren Etagen übereinander anzuordnen.

Die Erfindung geht von einer Vorrichtung aus, die durch die EP-A-0 129 053 bekannt geworden ist. Dabei bestehen die in einem senkrecht stehenden zylindrischen Gehäuse angeordneten Reingassammelaggregate aus je einer kreisförmigen, ebenen Bodenplatte, einem schmalen, ringförmigen Mantelteil und einem konischen Dach. Zwischen dem Mantelteil und der Gehäusewand besteht ein Ringspalt für den abwärts gerichteten Gasstrom. An der gelochten Bodenplatte sind hängende Filterelemente angebracht. Die Reingassammelaggregate stehen mit einem koaxialen Reingasrohr in Verbindung, das wahlweise entweder durch den Deckel oder durch den als Staubtrichter ausgebildeten Boden des Gehäuses geführt ist. Zum Zuführen von Treibgas für die Druckspülung sind in der Nähe der Gehäusewand senkrechte Rohre angeordnet, von denen in jeder Etage waagerechte Blasrohre ausgehen, die durch die Mantelteile der Reingassammelaggregate in diese hinein geführt sind. Jedes Blasrohr ist einer Gruppe von mehreren Filterelementen zugeordnet und genau über den einzelnen Filterelementen mit nach unten gerichteten Düsen versehen.

Bei dieser Vorrichtung werden die einzelnen Filterelemente von dem zu reinigenden Gasstrom im wesentlichen im Querstrom angeströmt. Nach einer Abreinigung kann daher der bereits abgeschiedene Staub, insbesondere die feinere Kornfraktion, wieder mitgerissen werden und erneut an die Filterelemente gelangen. Das bedingt eine Verkürzung sowohl der Abreinigungsperiode als auch - infolge nicht reversibler Anlagerung feiner Partikel - eine Verkürzung der Lebensdauer der Filterelemente.

Nach der Abreinigung einer Filterelementgruppe fällt der Staub auf das konische Dach des nächstunteren Reingassammelaggregats. Damit der Staub abrutscht, muß - falls nicht zusätzliche Reinigungsvorrichtungen vorhanden sind - der Neigungswinkel des Daches mindestens gleich dem Reibungswinkel sein. Entsprechend dem Anstieg des Daches nimmt die Länge der Filterelemente in Richtung auf die Gehäuseachse ab. Dadurch wird die Gesamtfilterfläche, die sich in einem Gehäuse von gegebener Größe unterbringen läßt, beeinträchtigt.

Die konische Dachform erschwert bei Einsatz stehend angeordneter Filterelemente die Abreinigung des Daches.

Die langen, verzweigten Leitungen für das unter hohem Druck stehende Treibgas liegen in dem von Heißgas durchströmten Raum und sind daher einer Temperatur ausgesetzt, bei der selbst austenitische Stähle nur noch eine geringe Festigkeit haben. Die Druckstöße und die an den Umlenkstellen auftretenden Reaktionskräfte können zum Versagen der Werkstoffe führen.

Gegenstand der DE-B-17 57 635 ist eine Filtervorrichtung mit einem Rohgaseinlaß im oberen Teil des Gehäuses und mit einem einzigen Reingassammelaggregat, das im unteren Teil des Gehäuses unmittelbar über einem Staubtrichter angeordnet ist. Es besteht aus mehreren parallelen, nach Art eines Gitterrostes mit Zwischenräumen angeordneten Sammelkanälen, an deren Oberseiten Filterschläuche angeschlossen sind, die im oberen Gehäuseteil aufgehängt sind. Die einzelnen Sammelkanäle sind durch die Gehäusewand hindurch nach außen geführt und münden in eine separate Reingaskammer. Jeder Sammelkanal hat am Ende einen Düsenfortsatz, in den eine Treibgasdüse hineinragt. Die Enden der Sammelkanäle sind mit einer Fremdgasleitung verbunden.

Bei dieser Vorrichtung strömt das Rohgas in senkrechter Richtung an den Filterschläuchen entlang. Wenn eine Filterschlauchgruppe abgereinigt wird, unterstützt der Rohgasstrom die Fallbewegung des abgelösten Staubes. Der Staub fällt durch die Zwischenräume der Sammelkanäle in den Staubtrichter. Ein Gasstrom fließt nicht durch diese Zwischenräume.

Die Vorrichtung ist offensichtlich nicht für die Reinigung von Heißgas bestimmt. Das folgt nicht nur aus der Verwendung von Filterschläuchen, die für hohe Temperaturen nicht geeignet sind, sondern auch aus der Anordnung der Sammelkanäle. Die Durchführung durch die Gehäusewand würde zu einer thermischen Beanspruchung führen, der das Material nicht standhält. Schließlich würde die Spülung mit Fremdgas jedesmal einen Thermoschock bewirken, es sei denn, man würde das Fremdgas auf die Temperatur des zu reinigenden Gases erhitzen.

Der Erfindung liegt die Aufgabe zugrunde, eine Vorrichtung der im Oberbegriff der Patentansprüche 1 und 2 angegebenen Gattung so weiterzubilden, daß das zu reinigende Gas in allen Etagen parallel zu den Filterelementen strömt, das heißt im Gleichstrom zu dem bei der Rückspülung anfallenden Staub, und daß ferner die in einem Gehäuse vorgegebener Abmessungen unterzubringende Filterfläche vergrößert wird.

Diese Aufgabe wird durch die kennzeichnenden Merkmale der Patentansprüche 1 und 2 gelöst.

Die Merkmalkombination en der Ansprüche 1 und 2 haben besondere Vorteile für die Abreinigung der Filterelemente. Die Reingasrohre, von denen jedes einzelne einer Gruppe von Filterelementen zugeordnet ist, werden innerhalb des Gehäuses für die Zuführung des Spülgases genutzt. Dadurch entfällt die Notwendigkeit, innerhalb des Gehäuses ein Leitungssystem für das Treibgas anzuordnen. Die in die Reingaskammer hineingeführten Treibgasrohre können kurz und gerade ausgebildet werden. Infolgedessen sind sie durch die mechanischen Beanspruchungen, die bei jedem Druckstoß auftreten, weniger gefährdet. Die Ausrüstung der Treibgasrohre mit Wasserkühlung wird vereinfacht. Aufgrund der Ejektorwirkung wird ein Großteil des Spülgases der Reingaskammer entnommen; dadurch wird ein thermischer Schock vermieden.

Gegenstände der Ansprüche 1 und 2 sind zwei alternative Ausgestaltungen der Erfindung. Der besondere Vorteil besteht darin, daß die in dem Gehäuse angeordneten Teile eine selbsttragende bauliche Einheit bilden, die sich im Betrieb unabhängig vom Gehäuse thermisch verformen kann und - nach Öffnen des Gehäuses - zum Beispiel zur Inspektion oder zur Durchführung von Wartungs- und Reparaturarbeiten - herausnehmbar ist.

Die in Anspruch 3 angegebene Anordnung der Sammelkanäle ist konstruktiv einfach und ermöglicht eine gleichmäßig dichte Verteilung der Filterelemente auf den Querschnitt des Gehäuses.

Die stehende Anordnung der Filterkerzen gemäß Anspruch 4 hat gegenüber der hängenden Anordnung den Vorteil, daß die Halterungen an den Sammelkanälen einfacher ausgeführt werden können, so daß sie im Heißbetrieb weniger anfällig gegen Anbackungen und dergleichen sind.

Die Zeichnung dient zur Erläuterung der Erfindung anhand von vereinfacht dargestellten Ausführungsbeispielen.
Figur 1 zeigt einen senkrechten Schnitt durch ein Ausführungsbeispiel
Figur 2 zeigt einen senkrechten Schnitt durch das Ausführungsbeispiel der Figur 1 in einer um 90° gedrehten Schnittebene
Figur 3 zeigt einen waagerechten Schnitt durch das gleiche Ausführungsbeispiel
Figur 4 zeigt die Einzelheit A aus Figur 1 in vergrößertem Maßstab
Figur 5 zeigt die Einzelheit B aus Figur 1 in vergrößertem Maßstab
Figur 6 zeigt ein zweites Ausführungsbeispiel der Erfindung.
Figur 7 zeigt ein drittes Ausführungsbeispiel der Erfindung.

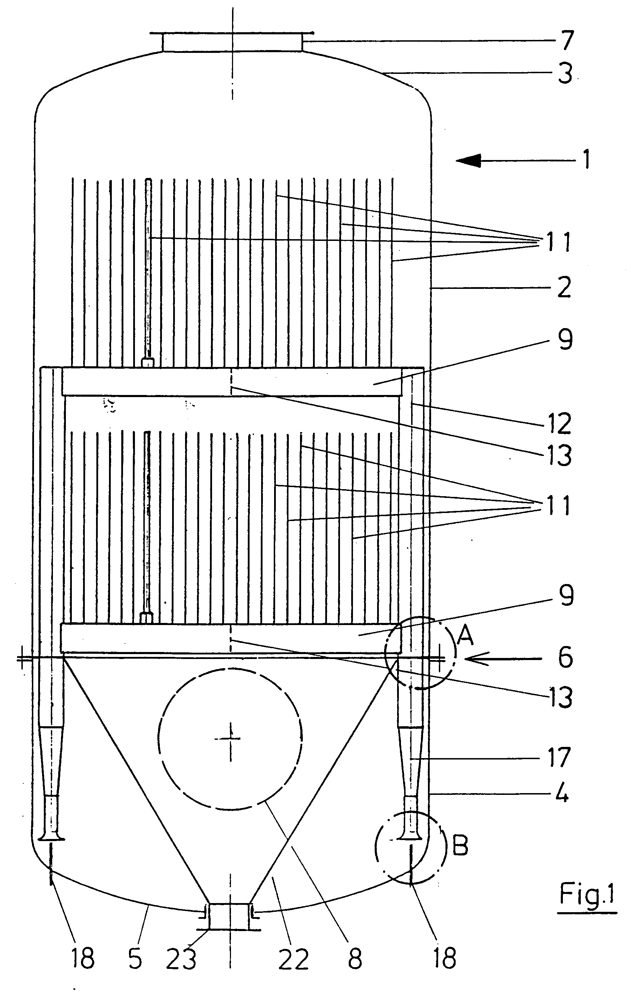

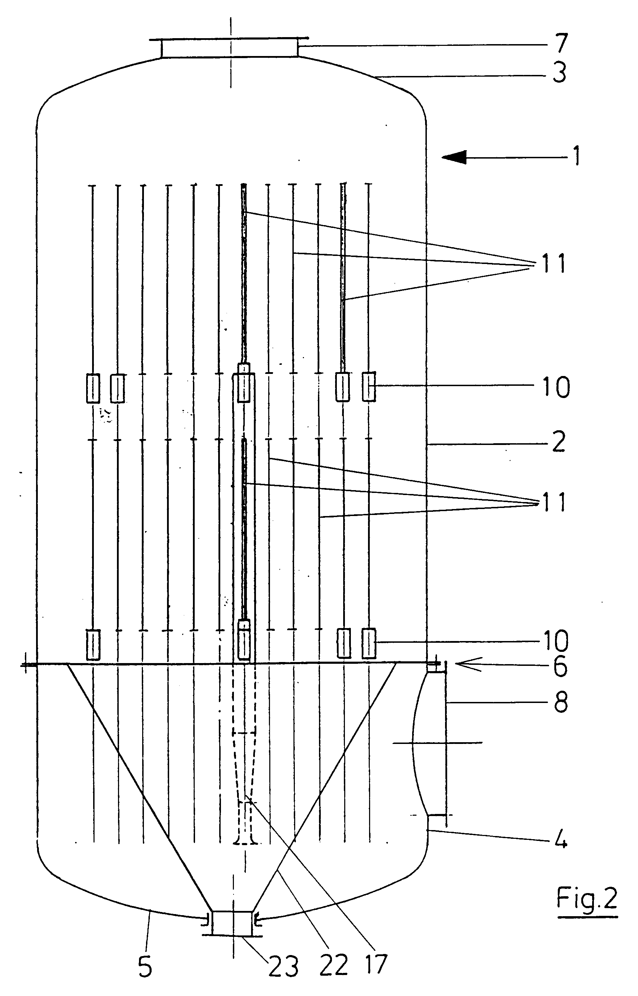

Das in den Figuren 1 bis 5 dargestellte Ausführungsbeispiel hat ein zweiteiliges, aufrecht stehendes, zylindrisches Gehäuse 1, bestehend aus einem Oberteil 2 mit gewölbtem Deckel 3 und aus einem Unterteil 4 mit gewölbtem Boden 5. Zwischen Oberteil 2 und Unterteil 4 besteht eine Flanschverbindung 6. Der Deckel 3 ist mit einem Eintrittsstutzen 7 für das Rohgas versehen. Seitlich an dem Unterteil 4 ist ein Auslaßstutzen 8 für das Reingas angebracht.

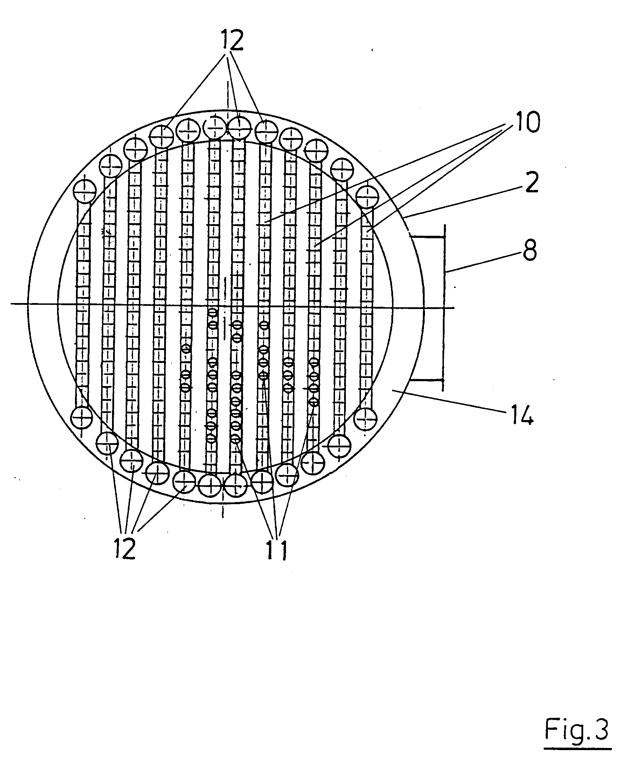

In dem Oberteil 2 sind etagenartig übereinander zwei Reingassammelaggregate 9 untergebracht. Diese bestehen je aus mehreren waagerechten Sammelkanälen 10, die nach Art eines Gitterrostes parallel zueinander auf Sehnen des kreisförmigen Gehäusequerschnitts angeordnet sind, wie aus Figur 3 erkennbar. Die Sammelkanäle 10 haben im Querschnitt die Form eines auf seiner schmalen Seite stehenden Rechtecks mit einem Seitenverhältnis von etwa 1:2. Zwischen je zwei benachbarten Sammelkanälen 10 befindet sich ein Zwischenraum, dessen Breite annähernd gleich der Breite eines Sammelkanals 10 ist. Auf der Oberseite eines jeden Sammelkanals 10 stehen reihenförmig dicht nebeneinander mehrere Filterkerzen 11. Die Filterkerzen 11 der unteren Etage reichen annähernd bis zu den Sammelkanälen 10 der oberen Etage, diejenigen der oberen Etage reichen bis in die Nähe des Deckels 3.

Die beiden Enden eines jeden Sammelkanals 10 sind an je ein Reingasrohr 12 angeschlossen. Die Reingasrohre 12 sind mit kurzem Abstand von der zylindrischen Gehäusewand angeordnet und bilden zwei einander gegenüberstehende Gruppen. Jedes Reingasrohr 12 ist sowohl in der unteren als auch in der oberen Etage mit einem Sammelkanal 10 verbunden. Das Reingasrohr 12 hat an der Verbindungsstelle eine Ausnehmung entsprechend dem Querschnitt des Sammelkanals 10, so daß das Innere des Sammelkanals 10 mit dem Inneren des Reingasrohres 12 in offener Verbindung steht. Jedoch ist jeder Sammelkanal 10 in der Mitte durch eine Trennwand 13 unterbrochen, so daß keine durchgehende Verbindung zwischen den beiden an seinen Enden angeschlossenen Reingasrohren 12 besteht.

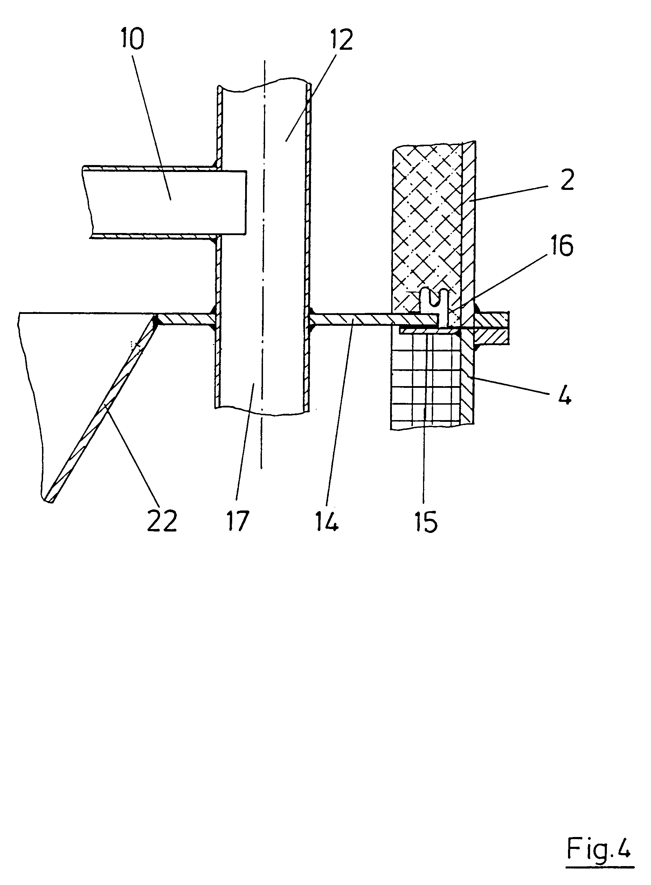

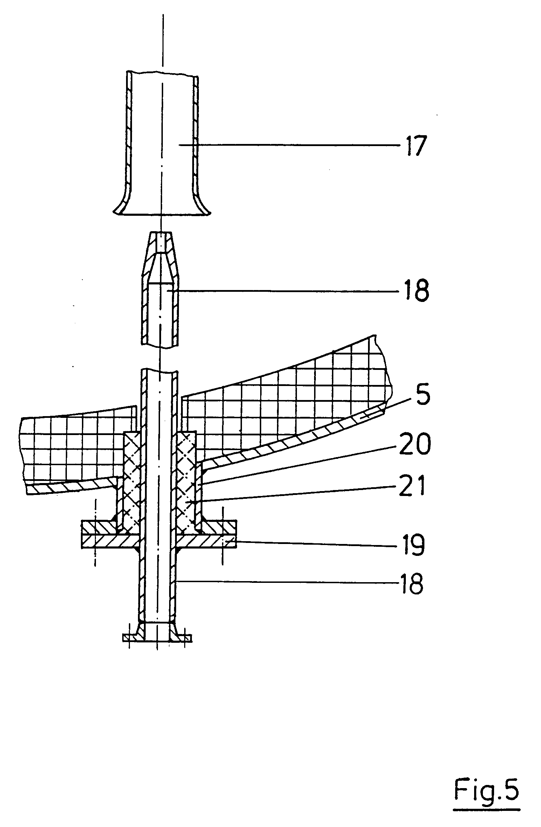

Wie man in Figur 4 erkennt, durchdringen die Reingasrohre einen waagerecht angeordneten Tragring 14, dessen äußerer Randstreifen auf einem mit der Wand des Unterteils 4 verbundenen Stützlager 15 aufliegt und an seiner Oberseite durch eine in der Isolierung des Oberteils liegende Dichtung 16 abgedeckt ist. Die mit dem Tragring 14 verschweißten Reingasrohre 12 haben unterhalb des Tragrings 14 je einen düsenartig verengten Fortsatz 17, dessen offenes, trompetenartig erweitertes Ende (Figur 5) bis in die Nähe des Bodens 5 reicht.

Jedem Reingasrohr 12 ist ein den Boden 5 durchdringendes, erheblich dünneres Treibgasrohr 18 zugeordnet, das koaxial mit dem Reingasrohr 12 ausgerichtet ist und mit seiner verengten Mündung bis nah an dessen offenes Ende heranreicht. Das Treibgasrohr 18 ist mit einem kragenartigen Haltering 19 versehen, der mit einem Flansch eines am Boden 5 angeschweißten Stutzens 20 verschraubt ist. In den Ringraum zwischen dem Treibgasrohr 18 und der Innenwand des Stutzens 20 sitzt eine Dichtung 21, die gleichzeitig auch zur Wärmeisolierung dient.

An den inneren Rand des Tragrings 14 ist ein Staubtrichter 22 angeschweißt, dessen Auslaufstutzen 23 verschieblich - zum Beispiel mittels einer nur angedeuteten Stopfbuchse - durch eine Öffnung des Bodens 5 hindurchgeführt oder mit einem nicht dargestellten Axialkompensator versehen ist. Der den Staubtrichter 22 umgebende ringförmige Raum des Unterteils 4 bildet die Reingaskammer.

Die gesamten Einbauten, bestehend aus dem Tragring 14, den Reingasrohren 12 mit den Fortsätzen 17, den Sammelkanälen 10 mit den Filterkerzen 11 und dem Staubtrichter 22, bilden eine selbsttragende, herausnehmbare Baueinheit, die sich unabhängig von dem Gehäuse 1 thermisch verformen kann. Zur Durchführung von Wartungsarbeiten wird das Oberteil nach Lösen der Flanschverbindung 6 von dem Unterteil 4 abgehoben.

Im Betrieb strömt das staubbeladene Rohgas in dem Gehäuse 1 von oben nach unten. Dem lokalen Widerstand entsprechend durchdringen Teilströme die Filterkerzen 11 von außen nach innen. Dabei wird der Staub an der Außenseite festgehalten und bildet einen Kuchen. Das gereinigte Gas strömt durch das Innere der Filterkerzen 11, die Sammelkanäle 10, die Reingasrohre 12 und deren Fortsätze 17 in die Reingassammelkammer. Der am Fuß der oberen Etage noch vorhandene Restgasstrom durchdringt das von den Sammelkanälen der oberen Etage gebildete Gitter und gelangt in die untere Etage.

Die Abreinigung der Filterkerzen 11 erfolgt - wie an sich bekannt - indem man die Filterkerzen gruppenweise von innen mit einem Spülgasstoß beaufschlagt. Dabei wird der abgeschiedene Staub von den Filterkerzen 11 abgelöst und bewegt sich unter dem Einfluß der Schwerkraft und des überall gleichmäßig nach unten gerichteten Gasstromes abwärts. Anders als bei Filtervorrichtungen, bei denen Querströmungen auftreten, wird weitgehend vermieden, daß der abgelöste Staub, insbesondere der Feinststaub, von dem Gasstrom wieder an die Filterkerzen getragen wird und sich dort irreversibel anreichert.

Zur Erzeugung der Spülgasstöße werden die Treibgasrohre 18 stoßweise mit Treibgas beaufschlagt, das etwa den 1,2 - 5-fachen Betriebsdruck des zu reinigenden Gases hat. Der relativ große Überdruck wandelt sich beim Eintritt in den düsenartigen Fortsatz 17 des Reingasrohres 12 in einen geringen Überdruck um. Dabei wird aus der Reingaskammer gereinigtes heißes Gas angesaugt und umgekehrt zur normalen Strömungsrichtung des Reingases als Spülgas über den Sammelkanal in die zugehörigen Filterkerzen gedrückt. Vorteilhaft ist dabei, daß das zugeführte Druckgas nur über die kurzen, geraden Treibgasrohre 18 strömt.

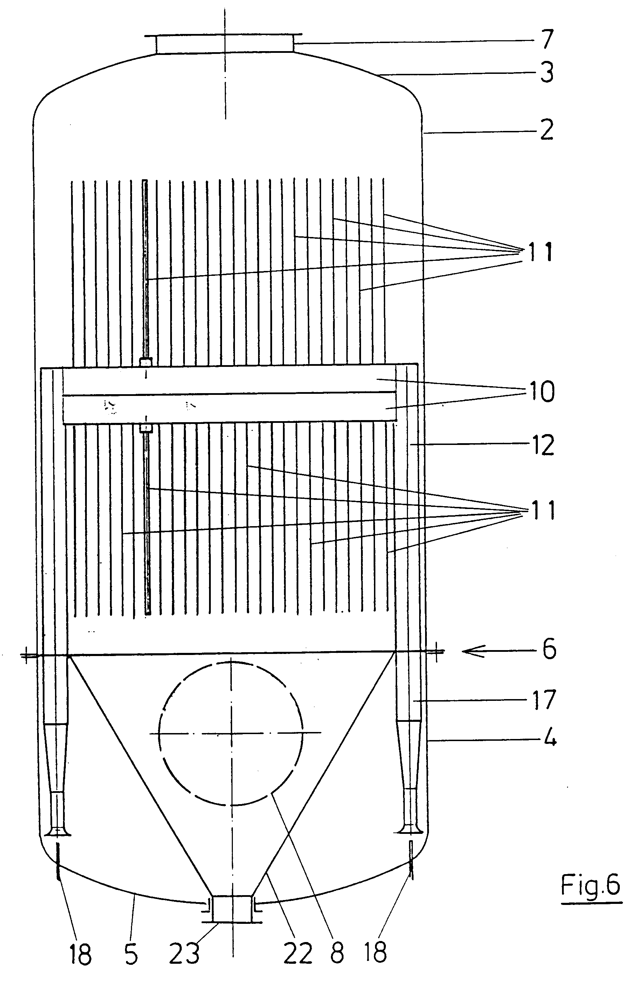

Das Ausführungsbeispiel gemäß Figur 6 unterscheidet sich von dem bisher beschriebenen Ausführungsbeispiel nur dadurch, daß die Sammelkanäle 10 der unteren Etage dicht unter denen der oberen Etage und dementsprechend die Filterkerzen 11 der unteren Etage hängend angeordnet sind.

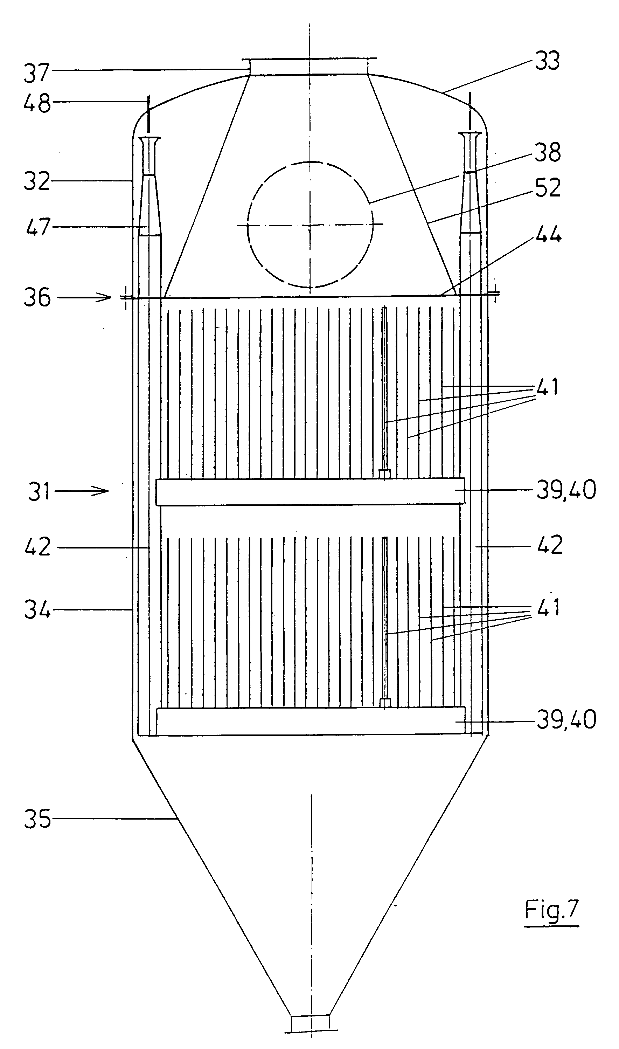

Bei dem Ausführungsbeispiel gemäß Figur 7 besteht das zylindrische Gehäuse 31 aus einem Oberteil 32 mit Deckel 33 und einem Unterteil 34 mit angeschlossenem Staubtrichter 35. Zwischen Oberteil 32 und Unterteil 34 besteht eine Flanschverbindung 36. Den Deckel 33 durchdringt ein Eintrittsstutzen 37 für das Rohgas. Seitlich an dem Oberteil 32 ist ein Auslaßstutzen 38 für das Reingas angebracht.

In dem Unterteil 34 sind etagenartig übereinander zwei Reingassammelaggregate 39 untergebracht, die analog zu dem im Zusammenhang mit dem ersten Ausführungsbeispiel beschriebenen Sammelaggregat 9 aus Sammelkanälen 40 aufgebaut, mit stehenden Filterkerzen 41 bestückt und an senkrechte Reingasrohre 42 angeschlossen sind.

Die Reingasrohre 42 durchdringen - ähnlich wie bei dem ersten Ausführungsbeispiel - einen Tragring 44, mit dem sie verschweißt sind. Der Tragring 44 liegt - ähnlich wie der Tragring 14 des zuerst beschriebenen Ausführungsbeispiels - auf Stützorganen auf, die an der Wand des Unterteils 34 befestigt sind. Der wesentliche Unterschied gegenüber dem ersten Ausführungsbeispiel besteht darin, daß die gesamte Filteranordnung an dem Tragring 44 aufgehängt ist und sich im Unterteil 34 befindet, dessen Höhe dementsprechend bemessen ist.

Oberhalb des Tragringes 44 haben die Reingasrohre je einen düsenartig verengten Fortsatz 47, dessen offenes, trompetenartig erweitertes Ende bis in die Nähe des Deckels 33 reicht.

Jedem Reingasrohr 42 ist - analog zu Figur 5, jedoch auf den Kopf gestellt - ein den Deckel 33 durchdringendes Treibgasrohr 48 zugeordnet.

An dem inneren Rand des Tragringes 44 ist ein Mündungstrichter 52 angeschweißt, der von dem Eintrittsstutzen 37 ausgeht. Der den Mündungstrichter 52 umgebende ringförmige Raum des Oberteils 32 bildet die Reingaskammer.

Die baulichen Einzelheiten dieses Ausführungsbeispiels sind analog zu dem zuerst beschriebenen Ausführungsbeispiel ausgebildet und bedürfen daher keiner erneuten Beschreibung.

Der Einfachheit halber sind zur Erläuterung des Prinzips Ausführungsbeispiele gezeichnet und beschrieben worden, die nur zwei Etagen aufweisen. In der Praxis sind Vorrichtungen mit mehr als zwei Etagen in den meisten Fällen vorteilhaft. Natürlich kann das Gehäuse - abweichend von den Ausführungsbeispielen - auch einen eckigen Querschnitt haben. Dies kann insbesondere unter atmosphärischen Druckbedingungen vorteilhaft sein. Für die Entstaubung unter erhöhtem Druck ist aber eine zylindrische, gegebenenfalls auch eine sphärische Bauform vorzuziehen.

## Patentansprüche

1. Vorrichtung zum Entstauben eines Gasstroms, insbesondere eines unter erhöhtem Druck stehenden Heißgasstroms,
mit einem Gehäuse (1),
mit einem Rohgaseinlaß (7) im oberen Teil des Gehäuses (1),
mit einem Staubtrichter (22),
mit mindestens zwei etagenartig übereinander angeordneten Reingassammelaggregaten (9), die mit mindestens einem im Inneren des Gehäuses (1) angeordneten senkrechten Reingasrohr (12) in Verbindung stehen,
und mit einer Vielzahl von senkrecht angeordneten, röhrenförmigen Filterelementen (11), die an die Reingassammelaggregate (9) angeschlossen sind,
dadurch gekennzeichnet, daß jedes Reingassammelaggregat (9) aus mehreren Sammelkanälen (10) besteht, die nach Art eines Gitterrostes mit Zwischenräumen angeordnet sind,
daß an jedem Sammelkanal (10) mehrere Filterelemente (11) angeschlossen sind,
daß das Gehäuse (1) aus einem Unterteil (4) und einem lösbar mit diesem verbundenen, abhebbaren Oberteil (2) besteht,
daß der Staubtrichter (22) an seinem oberen Rand mit einem kragenartigen Tragring (14) verbunden ist, der auf einem mit der Wand des Unterteils (4) verbundenen Stützlager (15) aufliegt, und im Unterteil (4) des Gehäuses (1) von einer ringförmigen Reingaskammer umgeben ist,
daß mehrere separate Reingasrohre (12), die an mindestens je einen Sammelkanal (10) angeschlossen sind, an dem Tragring (14) befestigt sind, diesen durchdringen und mit offenen Enden in die Reingaskammer münden
und daß Treibgasrohre (18) durch den Boden (5) des Gehäuses (1) hindurchgeführt sind und in die offenen Enden der Reingasrohre (12) hineinragen.

2. Vorrichtung zum Entstauben eines Gasstroms, insbesondere eines unter erhöhtem Druck stehenden Heißgasstroms,
mit einem Gehäuse (31),
mit einem Rohgaseinlaß (37) im oberen Teil des Gehäuses (31),
mit einem Staubtrichter (35),
mit mindestens zwei etagenartig übereinander angeordneten Reingassammelaggregaten (39), die mit mindestens einem im Inneren des Gehäuses (31) angeordneten senkrechten Reingasrohr (42) in Verbindung stehen,
und mit einer Vielzahl von senkrecht angeordneten, röhrenförmigen Filterelementen (41), die an die Reingassammelaggregate (39) angeschlossen sind,
dadurch gekennzeichnet, daß jedes Reingassammelaggregat (39) aus mehreren Sammelkanälen (40) besteht, die nach Art eines Gitterrostes mit Zwischenräumen angeordnet sind,
daß an jedem Sammelkanal (40) mehrere Filterelemente (41) angeschlossen sind,
daß das Gehäuse (31) aus einem Unterteil (34) und einem lösbar mit diesem verbundenen, abhebaren Oberteil (32) besteht,
daß ein Mündungstrichter (52), der von dem Rohgaseinlaß (37) ausgeht, an seinem unteren Rand mit einem kragenartigen Tragring (44) verbunden ist, der auf einem mit der Wand des Unterteils (34) verbundenen Stützlager aufliegt, und im Oberteil (32) des Gehäuses (31) von einer ringförmigen Reingaskammer umgeben ist,
daß mehrere separate Reingasrohre (42), die an mindestens je einen Sammelkanal (40) angeschlossen sind, an dem Tragring (44) befestigt sind, diesen durchdringen und mit offenen Enden in die Reingaskammer münden,
und daß Treibgasrohre (48) durch den Deckel (33) des Gehäuses (31) hindurchgeführt sind und in die offenen Enden der Reingasrohre (42) hineinragen.

3. Vorrichtung nach Anspruch 1 oder 2, gekennzeichnet durch parallel angeordnete Sammelkanäle (10,4).

4. Vorrichtung nach einem der Ansprüche 1 bis 3, gekennzeichnet durch stehend angeordnete Filterkerzen (11,41).

## Claims

1. An apparatus for removing dust from a gas stream, more particularly a hot gas stream under raised pressure,
comprising a housing (1),
comprising a crude gas inlet (7) in the upper part of the housing (1),
comprising a dust hopper (22),
comprising at least two clean gas collecting units (9) which are arranged one above the other in tiers and are connected to at least one vertical clean gas pipe (12) arranged inside the housing (1),
and comprising a plurality of tubular filter elements (11) which are arranged vertically and are connected to the clean gas collecting units (9),
characterized in that each clean gas collecting unit (9) consists of several collecting ducts (10) arranged in the manner of a grid with interstitial spaces,
in that several filter elements (11) are connected to each collecting duct (10),
in that the housing (1) consists of a lower part (4) and an upper part (2) separably joined to the said lower part and designed for lifting off,
in that the dust hopper (22) is connected at its upper edge to a collar-like supporting ring (14) resting on a supporting bearing (15) joined to the wall of the lower part (4), and is surrounded in the lower part (4) of the housing (1) by an annular clean gas chamber,
in that several separate clean gas pipes (12), connected to at least one collecting duct (10) respectively, are attached to the supporting ring (14), penetrate the same and the open ends of which discharge into the clean gas chamber
and in that propellant gas pipes (18) are passed through the base (5) of the housing (1) and project into the open ends of the clean gas pipes (12).

2. An apparatus for removing the dust from a gas stream, more particularly a hot gas stream under raised pressure,.
comprising a housing (31),
comprising a crude gas inlet (37) in the upper part of the housing (31),
comprising a dust hopper (35),
comprising at least two clean gas collecting units (39) which are arranged one above the other in tiers and are connected to at least one vertical clean gas pipe (42) arranged inside the housing (31),
and comprising a plurality of tubular filter elements (41) which are arranged vertically and are connected to the clean gas collecting units (39),
characterized in that each clean gas collecting unit (39) consists of several collecting ducts (40) arranged in the manner of a grid with interstitial spaces,
in that several filter elements (41) are connected to each collecting duct (40),
in that the housing (31) consists of a lower part (34) and an upper part (32) separably joined to the lower part and designed for lifting off,
in that a mouth hopper (52) which proceeds from the crude gas inlet (37) is joined on its lower edge to a collar-like supporting ring (44) resting on a supporting bearing joined to the wall of the lower part (34), and is surrounded in the upper part (32) of the housing (31) by an annular clean gas chamber,
in that several separate clean gas pipes (42), connected to at least one collecting duct (40) respectively, are attached to the supporting ring (44), penetrate the same and the open ends of which discharge into the clean gas chamber,
and in that propellant gas pipes (48) are passed through the cover (33) of the housing (31) and project into the open ends of the clean gas pipes (42).

3. An apparatus according to claim 1 or 2, characterized by collecting ducts (10, 4) arranged so as to be parallel.

4. An apparatus according to one of claims 1 to 3, characterized by filter cartridges (11, 41) arranged so as to be upright.

## Revendications

1. Dispositif pour dépoussiérer un écoulement de gaz, en particulier d'un courant de gaz chaud sous pression élevée, comportant :
une enveloppe (1),
une entrée de gaz brut (7) dans la partie supérieure de l'enveloppe (1),
un entonnoir à poussières (22),
au moins deux groupes de collecte de gaz épuré (9) qui sont disposés l'un au-dessus de l'autre en formant des étages et qui sont en communication avec au moins un tube à gaz épuré (12) vertical disposé à l'intérieur de l'enveloppe (1),
et de nombreux éléments filtrants (11) tubulaires qui sont disposés verticalement et qui sont raccordés aux groupes de collecte de gaz épuré (9),
caractérisé en ce que
chaque groupe de collecte de gaz épuré (9) est constitué de plusieurs canaux collecteurs (10) disposés à la manière d'un caillebotis avec des interstices,
plusieurs éléments filtrants (11) sont raccordés à chaque canal collecteur (10),
l'enveloppe (1) est constituée d'une partie inférieure (4) et d'une partie supérieure (2) assemblée de manière amovible à la précédente et pouvant être enlevée,
l'entonnoir à poussières (22) est assemblé par son bord supérieur à un anneau de support (14), en forme de collet, qui repose sur un support d'appui (14) assemblé à la paroi de la partie inférieure (4) et qui est entouré dans la partie inférieure (4) de l'enveloppe (1) par une chambre à gaz épuré de forme annulaire,
plusieurs tubes à gaz épuré séparés (12), qui sont raccordés à au moins chaque fois un canal collecteur (10), sont fixés à l'anneau de support (14), traversent celui-ci et débouchent, par des extrémités ouvertes, dans la chambre à gaz épuré,
et des tubes à gaz de propulsion (18) sont passés à travers le fond (5) de l'enveloppe (1) et pénètrent dans les extrémités ouvertes des tubes à gaz épuré (12).

2. Dispositif pour dépoussiérer un écoulement de gaz, en particulier un courant de gaz chaud sous pression élevée, comportant :
une enveloppe (31),
une entrée de gaz brut (37) dans la partie supérieure de l'enveloppe (31),
un entonnoir à poussières (35),
au moins deux groupes de collecte de gaz épuré (39) qui sont disposés l'un au-dessus de l'autre en formant des étages et qui sont en communication avec au moins un tube à gaz épuré (42) vertical disposé à l'intérieur de l'enveloppe (31),
et de nombreux éléments filtrants (41) tubulaires qui sont disposés verticalement et qui sont raccordés aux groupes de collecte de gaz épuré (39),
caractérisé en ce que
chaque groupe de collecte de gaz épuré (39) est constitué de plusieurs canaux collecteurs (40) disposés à la manière d'un caillebotis avec des interstices,
plusieurs éléments filtrants (41) sont raccordés à chaque canal collecteur (40),
l'enveloppe (31) est constituée d'une partie inférieure (34) et d'une partie supérieure (32) assemblée de manière amovible à la précédente et pouvant être enlevée,
un entonnoir d'orifice (52), partant de l'entrée de gaz brut (37), est assemblé par son bord inférieur à un anneau de support (44), en forme de collet, qui repose sur un support d'appui assemblé à la paroi de la partie inférieure (34) et qui est entouré dans la partie supérieure (32) de l'enveloppe (31) par une chambre à gaz épuré annulaire,
plusieurs tubes à gaz épuré séparés (42), qui sont raccordés à au moins chaque fois un canal collecteur (40), sont fixés à l'anneau de support (44), traversent celui-ci et débouchent, par des extrémités ouvertes, dans la chambre à gaz épuré,
et des tubes à gaz de propulsion (48) sont passés à travers le couvercle (33) de l'enveloppe (31) et pénètrent dans les extrémités ouvertes des tubes à gaz épuré (42).

3. Dispositif selon la revendication 1 ou 2, caractérisé par des canaux collecteurs (10, 4) disposés parallèlement.

4. Dispositif selon l'une des revendications 1 à 3, caractérisé par des bougies filtrantes disposées verticalement (11, 41).
